# EUROPÄISCHE PATENTSCHRIFT

(11) **EP 1 205 676 B1**
(45) Veröffentlichungstag und Bekanntmachung des Hinweises auf die Patenterteilung: **10.08.2005**
(21) Anmeldenummer: 01126690.5
(22) Anmeldetag: 08.11.2001
(51) Int. Cl.: F16B 41/00, F16B 5/02

(54) **Montageeinheit aus einem Bauteil und mindestens einer Schraube**
Assembly unit consisting of a component and at least one screw
Unité de montage constituée d'un composant et d'au moins une vis

(30) Priorität: 09.11.2000 DE 10055405
(43) Veröffentlichungstag der Anmeldung: 15.05.2002
(73) Patentinhaber: Kamax-Werke Rudolf Kellermann GmbH & Co. KG, 37520 Osterode am Harz (DE)
(72) Erfinder: Hartmann, Gunther, Dr.-Ing., 36304 Alsfeld (DE); Sommer, Wolfgang, Dipl.-Ing., 35285 Gemünden/Main (DE); Wagner, Frank, Dipl.-Ing., 35418 Grossen Buseck (DE)
(74) Vertreter: Rehberg Hüppe + Partner

(56) Entgegenhaltungen:
- EP-A- 0 389 783
- WO-A-95/21335
- DE-A- 2 549 727
- DE-A- 19 651 838
- DE-A- 19 818 369

## Beschreibung

Die Erfindung betrifft eine Montageeinheit aus einem Bauteil und mindestens einer Schraube sowie einer jeder Schraube zugeordneten Hülse, wobei das Bauteil für jede Schraube je ein Durchgangsloch aufweist, jede Schraube einen der Betätigung dienenden Kopf mit einer dem Bauteil zugekehrten Auflagefläche und einen zumindest teilweise mit einem Gewinde versehenen Schaft besitzt und die Hülse in das Durchgangsloch einführbar ausgebildet und mit der Schraube und dem Bauteil verliersicher verbunden ist. In der Montagetechnik werden in vermehrtem Ausmaß Montageeinheiten verlangt, bei denen mehrere Bestandteile in einer vormontierten Einheit bereits zusammengefügt sind. Die Montageeinheit aus einem Bauteil und meist mehreren Schrauben wird dann mit einem Werkstück verbunden. Ein typisches Beispiel für diese Technik ist ein Oberteil und ein Unterteil, die miteinander durch eine oder mehrere Schrauben verschraubt werden müssen. Dabei wird aus dem Oberteil als Bauteil und den meist mehreren Schrauben eine vormontierte Montageeinheit geschaffen, an der die Schrauben unverlierbar gehalten sind. Diese Montageeinheit wird dann mit dem Unterteil als Werkstück verschraubt, wobei die Schrauben entweder nacheinander oder gleichzeitig angezogen werden können, insbesondere unter Einsatz eines mehrspindligen automatischen Schraubers. Typische Einsatzfälle für solche Montageeinheiten liegen im Automobilbau an. Dabei bildet beispielsweise der Zylinderkopfdeckel oder ein Deckel eines Getriebes das Bauteil, welches mit den Schrauben mit dem Werkstück, also dem Zylinderblock bzw. dem Getriebegehäuse, verschraubt wird. Durch die Schaffung solcher Montageeinheiten wird ein möglichst hoher Grad der Vorfertigung erreicht. Die Schrauben befinden sich bereits in ausgerichtetem Zustand an dem Bauteil verliersicher vormontiert. Sie sind während des Transportes vor Beschädigung weitgehend geschützt und erlauben die schnelle Verbindung mit dem Werkstück.

Eine Montageeinheit der eingangs beschriebenen Art ist aus der PCT-Anmeldung mit der internationalen Veröffentlichungsnummer WO 95/21335 bekannt. Die dortige Montageeinheit weist ein Bauteil, also beispielsweise einen Gehäusedeckel, sowie mindestens ein Fixierteil in Form einer Schraube auf. Zu jeder Schraube gehört jedoch noch ein drittes Teil, nämlich eine als Verliersicherung eingesetzte Hülse. Die Hülse besteht aus Metall, insbesondere aus Blech. Sie verteuert die Herstellkosten der Montageeinheit. Die Hülse wird in ein entsprechendes Durchgangsloch an dem Bauteil eingepreßt, wozu ein gesonderter Vormontageschritt erforderlich ist. Die Hülse sitzt durch Reibschluß in dem Durchgangsloch des Bauteils. Sie besitzt eine Bauhöhe, die dem Vielfachen der Bauhöhe des Bauteils im Bereich des Durchgangsloches entspricht. Auch die Schraube weist eine entsprechend komplizierte Formgebung und eine große axiale Länge auf. Im Bereich des Schaftes der Schraube ist ein Ringflansch mit beiderseits sich anschließenden Ringrillen vorgesehen, der gesondert zu dem Gewinde am Schaft der Schraube hergestellt werden muß. Die Dimensionierung des Ringflansches ist auf die Dimensionierung eines Halskragens an der Hülse abgestimmt, so daß auf diese Art und Weise eine Axialsperre gebildet wird, die aber eine entsprechend große axiale Beweglichkeit in einem Bewegungsbereich eröffnet., so daß in der vormontierten Stellung die Schrauben zwar verliersicher, jedoch nicht fest an dem Bauteil gehalten sind. Es besteht auch die Möglichkeit, auf die Ausbildung eines Ringflansches an der Schraube zu verzichten. In diesem Falle müssen besondere Elemente an der Hülse ausgebildet werden, die in Verbindung mit der Schraube eine Axialsperre ergeben. Damit wird die Hülse wieder komplizierter und aufwendiger in ihrer Formgebung. In diesem Falle kann das Gewinde der Schraube einen Bestandteil der Axialsperre übernehmen. Zwischen dem Durchmesser des Durchgangsloches im Bauteil und dem Durchmesser des Schaftes der Schraube besteht eine Relation nur insofern, als die Schraube mitsamt der Hülse durch dieses Durchgangsloch hindurchtreten bzw. in dieses Durchgangsloch eingesetzt werden muß. Dennoch findet eine genaue axiale Ausrichtung der Schraube an dem Bauteil nicht statt, weil die Schraube nur begrenzt beweglich gehalten ist. Dies kann für den Einschraubvorgang der Schraube im Werkstück einen Vorteil bedeuten, wenn sichergestellt ist, daß die Schraube zentrierend den Eingang in das Gewinde im Werkstück findet. Durch die Möglichkeit der Achsverkippung der Schrauben gegeneinander ist jedoch das Eintreten der freien Schaftenden in die Gewinde im Werkstück nur bedingt zu erreichen. Diesen Nachteilen kann man dadurch entgegenwirken, daß die Hülse als drittes Bauteil innerhalb der Montageeinheit eine relativ große axiale Länge aufweist, insbesondere erheblich länger ausgebildet ist als die Wandstärke des Bauteils. Durch die Länge der Hülse muß auch die Länge der Schraube vergrößert werden, was nicht nur einen zusätzlichen Kostenaufwand bedeutet, sondern auch in manchen Fällen die Funktion nachteilig beeinflußt. Der grundsätzliche Einsatz solcher Hülsen, also bei Montageeinheiten aus mindestens drei einzelnen Elementen, ist insofern nachteilig, als die Hülse beim Verschrauben der Schraube in das Werkstück mitverspannt wird. Wenn dann noch Hülsen aus vergleichsweise dünnem deformierbaren Blech eingesetzt werden, so besteht die Gefahr unterschiedlicher Verformungen der Hülsen beim Anziehen der Schrauben, so daß die Aufbringung einer reproduzierbaren Vorspannkraft nur bedingt möglich ist.

Die DE 196 51 838 A1 zeigt ein aus Kunststoff bestehendes Bauteil, welches unter Zwischenschaltung einer Dichtung mit einem Werkstück zu verschrauben ist. Auch hier findet eine Hülse Verwendung, die das Bauteil durchsetzt und die mit der Dichtung verbunden ist. Auch hier muß die Schraube einen gesondert herzustellenden Ringflansch aufweisen, der mit der Hülse im Sinne einer Axialsperre zusammenwirkt. Auf diese Weise ist die Schraube lose, aber verliersicher an der Hülse gehalten. Die zusätzlich zu dem Bauteil und der Schraube eingesetzte Hülse als drittes Element der Montageeinheit muß sich jedoch nicht unbedingt durch das gesamte Durchgangsloch im Bauteil hindurch erstrecken. So zeigt die DE 195 46 072 C2 eine axial verkürzte Hülse mit einem konischen Kragen, der nur teilweise unter Reibschluß in ein entsprechend teilweise konisch gestaltetes Durchgangsloch im Bauteil eingreift. Die Unverlierbarkeit wird hier durch Reibkräfte erbracht, so daß eine entsprechend hohe Unsicherheit resultiert. Auch dabei gelangt letztendlich die scheibenartig ausgebildete Hülse zwischen die Auflagefläche am Kopf der Schraube und der entsprechenden Gegenfläche am Bauteil. Die Hülse wird also auch hier einklemmt, und es bestehen grundsätzlich ähnliche Nachteile, wie oben beschrieben.

Bei manchen Montageeinheiten werden selbstfurchende Schrauben mit trilobularem Querschnitt im Bereich des Gewindeschaftes eingesetzt. Dies ermöglicht zwar vorteilhaft den Entfall der Hülse als drittes Element. Andererseits besteht die Gefahr, daß beim Einschrauben der Schrauben in die Durchgangslöcher im Bauteil Späne entstehen, die in Verbindung mit speziellen Werkstücken, z.B. Getrieben von Automobilen, nicht tolerierbar sind. Außerdem weist eine Schraube mit trilobularem Querschnitt den Nachteil auf, daß der Traganteil des Gewindes über den Umfang nicht konstant ist. Bei der Montage entstehen auch ungleichmäßige Einschraubmomente.

Der Erfindung liegt die Aufgabe zugrunde, eine vormontierbare bzw. vormontierte Montageeinheit aufzuzeigen, die insbesondere auch für nicht selbstfurchende Schrauben, z.B. Schrauben mit metrischem Gewinde, geeignet ist und bei der die einzelne Schraube an der vormontierten Montageeinheit einen festen Sitz mit insbesondere senkrecht ausgerichteter Achse einnimmt. Außerdem sollen die Schraube bzw. die Schrauben in der vormontierten Stellung unverlierbar an dem Bauteil gehalten sein.

Erfindungsgemäß wird dies bei einer Montageeinheit der eingangs beschriebenen Art dadurch erreicht, daß zur Bereitstellung der Axialsperre und einer Achsausrichtung der Schraube der Durchmesser des Durchgangsloches im Bauteil, die Hülse mit ihrem Außendurchmesser und ihrem Innendurchmesser und die Schraube mit ihrem mit dem Gewinde versehenen Schaft derart relativ zueinander dimensioniert sind, daß die Schraube nach der Vormontage das Durchgangsloch im Bauteil festgesetzt durchsetzt, wobei die Auflagefläche an der Schraube zur Übertragung der Axialkraft unter Umgehung der Hülse mit dem Bauteil nach der Montage in direkten Kontakt kommend ausgebildet ist.

Die Erfindung baut auf der Idee auf, an der Montageeinheit eine oder mehrere Schrauben, auch solche mit einem metrischen Gewinde, einzusetzen. Es können aber auch gewindeformende Schrauben eingesetzt werden, vorzugsweise solche, die beim Eindrehen ein Gewinde spanlos formen. Es wird eine abgestimmte Relation zwischen dem Durchmesser des Durchgangsloches im Bauteil, einer in das Durchgangsloch fest einzubringenden Hülse und der Dimensionierung der Schraube, insbesondere in ihrem mit Gewinde versehenen Schaftabschnitt, hergestellt, so daß nach der Vormontage die Schraube das Durchgangsloch festgesetzt durchsetzt bzw. in dieses fest eingreift. Damit wird nicht nur die Axialsperre geschaffen, sondern zugleich auch eine feststehende Achsausrichtung der Schraube relativ zum Bauteil erreicht. Die Ausrichtung der Achse der Schraube ist damit festgelegt, und die Schraube kann nicht mehr verkippen. Wenn die Schraube nur teilweise die Hülse in dem Durchgangsloch durchsetzt, liegt das Gewinde der Schraube teilweise im Bereich der Hülse und teilweise auf der dem Kopf zugekehrten Seite der Schraube außerhalb des Durchgangsloches. Das Gewinde ist damit während des Transportes vom Hersteller der vormontierten Montageeinheit bis zum Verarbeiter in geschützter Stellung, so daß Beschädigungen nicht zu erwarten sind. Die Schraube oder die Schrauben erhalten in den jeweiligen Hülsen und diese in den Durchgangslöchern bei insoweit verbesserter Funktion eine achsausgerichtete feste Stellung, in der auch die Unverlierbarkeit erbracht ist.

Die Hülse bildet gleichsam ein dübelartiges Vormontageelement für das Einschrauben der Schraube. Die Auflagefläche an der Schraube zur Übertragung der Axialkraft ist unter Umgehung der Hülse mit dem Bauteil in direkten Kontakt kommend ausgebildet, ohne daß die Aufbringung und Einwirkung der Axialkraft in angezogenem Zustand der Schraube beeinträchtigt wird. Die Hülse besteht bevorzugt aus Kunststoff und kann beim Einschrauben durch das Gewinde der Schraube spanfrei verformt werden. Die Hülse bleibt in angezogenem Zustand der Schraube frei von jeglicher Axialkraft, sodaß nachteilige Setzerscheinungen unter Vorspannkraftabfall nicht zu erwarten sind. Zur Erzielung einer Dichtwirkung zwischen Werkstück, Bauteil und Kopf der Schraube kann es jedoch sinnvoll sein, die Dimensionierung der Hülse so vorzunehmen, daß eine zur Erzielung der Dichtwirkung notwendige, begrenzte Axialkraft über die Hülse übertragen wird. Diese Axialkräfte bleiben jedoch vergleichsweise gering, sodaß auch in einem solchen Fall keine Setzerscheinungen zu erwarten sind.

Es kann sinnvoll sein, wenn die Schraube im Bereich des Schaftes im Anschluß an die Auflagefläche eine einen Hinterschnitt bildende Ringnut aufweist, deren Durchmesser kleiner als der Innendurchmesser der Hülse und deren wirksame axiale Länge größer als die Länge der Hülse im Durchgangsloch des Bauteils ist. Insbesondere dann, wenn das Bauteil mehrere solcher Schrauben in der vormontierten Stellung aufweisen muß, so daß es für eine Mehrfachverschraubung mit dem Werkstück ausgebildet ist, ist es von Bedeutung, daß die Schraube im Bereich des Schaftes zwischen der Auflagefläche am Kopf und dem Gewindeabschnitt eine einen Hinterschnitt bildende Ringnut aufweist, deren Durchmesser kleiner als der Innendurchmesser der Hülse und deren axiale Länge unter Berücksichtigung der entsprechenden Übergangsradien größer als die axiale Länge des Durchgangsloches im Bauteil ist. Durch die feste Anordnung der Schraube wird in der vormontierten Einheit einerseits die Axialsperre und die Achsausrichtung sowie die Unverlierbarkeit der montierten Montageeinheit erreicht. Andererseits kommt die Schraube bzw. die Schrauben im Bereich der den Hinterschnitt bildenden Ringnut von der Hülse im Bauteil radial und axial frei, so daß unter Berücksichtigung der Toleranzen eine Anpassung der Schraube oder der Schrauben an dem Werkstück möglich wird. Sobald die Schraube mit ihrem Gewinde aus dem elastisch/plastisch geformten Gewinde in der Hülse im Durchgangsloch des Bauteils ausgetreten ist, kann sich das Bauteil im begrenztem Maß axial und/oder radial gegenüber dem Werkstück bewegen bzw. anpassen. Durch weiteres Anziehen der Schraube wird die Vorspannkraft aufgebracht. Beim Einsatz mehrerer Schrauben wird eine anfänglich mögliche Verspannung des Bauteils am Werkstück durch die Schrauben beim Austritt der Gewinde der Schrauben aus den Hülsen am Bauteil freigegeben, so daß das Bauteil in eine zwangsfreie Relativlage zu dem Werkstück gelangt. Von dieser Anpassung kann auch dann Gebrauch gemacht werden, wenn die Schrauben nacheinander in das Werkstück eingeschraubt werden. Gleiches gilt auch für das gleichzeitige Verschrauben mehrerer oder aller Schrauben in das Werkstück. In letzterem Falle ist es besonders vorteilhaft, wenn gewindefurchende Schrauben Verwendung finden und die Bohrungen im Werkstück, in die die Schrauben eingreifen, nicht mit Gewinde versehen werden, sondern lediglich als vorgegossene oder spanend bearbeitete Bohrungen ausgebildet sind. Man spart dabei einerseits den Herstellungsschritt von Gewinden im Werkstück ein und nutzt die gewindeformende Eigenschaft der Schraube aus. Ein gegenseitiges Verspannen des Bauteils im Verhältnis mehrerer Schrauben zueinander wird vermieden, weil sich jede Schraube ihr eigenes Gewinde in der Bohrung im Werkstück beim Eindringen in die Bohrung selbst bildet. So wird den relativen Winkellagen der Gewinde der Schrauben beim Einschraubvorgang zueinander automatisch Rechnung getragen. Bei Einhaltung entsprechender Toleranzen ist es aber auch möglich, die vormontierte Montageeinheit aus Bauteil und Schrauben mit einem Werkstück zu verbinden, in dessen den Schrauben zugeordneten Bohrungen auch bereits Gewinde enthalten sind. Dies gilt sowohl für das gleichzeitige Verschrauben mehrerer Schrauben in ein Werkstück als auch das Verschrauben mehrerer Schrauben nacheinander. Auch hierbei wirkt sich die Verwendung von Hülsen aus nachgiebigem Werkstoff, insbesondere Kunststoff, vorteilhaft aus.

Das Gewinde an jeder Schraube kann auf der dem Kopf abgekehrten Seite einen Ansatzbereich aufweisen, in welchem der Außendurchmesser des Gewindes kleiner als der Innendurchmesser der Hülse im Durchgangsloch im Bauteil ausgebildet ist. Diese gegenseitige Abstimmung ist derart zueinander getroffen, daß einerseits die Schraube mit dem Ansatzbereich in die Hülse eingefädelt werden kann und andererseits dennoch beim Einschrauben in die Hülse die gewindeformende Funktion des Gewindes der Schraube für die zumindest elastische Verformung der Hülse benutzt wird.

In allen Fällen kann der Schaft der Schraube im Bereich des Gewindes auch einen trilobularen Querschnitt aufweisen. Ein solcher trilobularer Querschnitt stellt ein so genanntes Gleichdick dar, d. h. an allen Stellen über den Umfang des Querschnittes ergibt sich bei der Durchmesserbestimmung mit 180° Versatz das gleiche Maß, obwohl der Querschnitt etwa dreieckige oder plektronartige Gestalt besitzt. Ein solcher trilobularer Querschnitt erfüllt auch die Funktion einer Selbstzentrierung und ermöglicht zum anderen das elastisch/plastische Formen des Gewindes in der Hülse und ggf. zusätzlich im Werkstück.

Die Hülse kann in dem Durchgangsloch des Bauteils durch Reibschluß und/oder Formschluß festsetzbar ausgebildet sein. Die Hülse ist damit in dem Durchgangsloch des Bauteils verdrehgesichert gehalten. Hierzu kann das Durchgangsloch im Bauteil und/oder der Außendurchmesser der Hülse unrund gestaltet sein, beispielsweise als Vieleck, mit einer radial abstehenden Nase, mit ovalem Querschnitt, als Vierkant o. dgl.. Die Festsetzung durch Reibschluß erfolgt durch entsprechende Dimensionierung und Einpressen der Hülse in das Durchgangsloch. Dies kann in verschiedener Weise erfolgen. Die Hülse kann mit beidseitigem Überstand, mit einseitigem Überstand oder ohne jeglichen Überstand im Durchgangsloch festgesetzt werden.

Die Hülse in dem Durchgangsloch des Bauteils kann einen Innendurchmesser aufweisen, der größer als der Kerndurchmesser des mit dem Gewinde versehenen Schaftes der Schraube ausgebildet ist. Die Formgebung eines Gewindes in der Hülse ist zweitrangig, da die Schraube beim Anziehen ohnehin mit ihrem Gewinde von der Hülse freikommt. Es genügt, wenn die Schraube in der vormontierten Stellung ihren festen, ausgerichteten und unverlierbaren Sitz in der als Dübel wirkenden Hülse einnimmt.

Die Schraube kann zur Verhinderung des Einklemmens von Material der Hülse beim Anziehen im Anschluß an die Auflagefläche eine als umlaufende Ausweichnut ausgebildete Vertiefung aufweisen. Diese Ausweichnut ist dann erforderlich, wenn die Hülse in der in das Durchgangsloch eingepressten Stellung einen axialen und radialen Überstand nach außen aufweist. In der Regel wird die Ausweichnut auf kleinerem Durchmesser innen und die Anlagefläche auf größerem Durchmesser außen angeordnet sein.

Die Hülse kann eine größere Bauhöhe als das Bauteil im Bereich des Durchgangsloches aufweisen und auf der dem Kopf der Schraube zugekehrten Seite einen radial über das Durchgangsloch überstehenden Kragen oder entsprechende Vorsprünge aufweisen, die das Einpressen der Hülse in das Durchgangsloch des Bauteils begrenzen. Der Kragen und die Vorsprünge bilden zugleich einen Anschlag beim Einschrauben der Schraube und verhindern, daß die Hülse aus dem Durchgangsloch ausgetrieben wird. Auch ohne Kragen und Vorsprünge kann die Hülse zumindest auf der dem Kopf der Schraube zugekehrten Seite außerhalb der Höhe des Bauteils im Bereich des Durchgangslochs durch das Einschrauben der Schraube spreizbar ausgebildet sein, sodaß der sich nach außen erstrekkende Überstand der Hülse beim Einschrauben der Schraube einen radial vorstehenden Anschlag bildet.

Die Hülse kann aber auch oder zusätzlich auf der dem Kopf der Schraube abgekehrten Seite einen über das Durchgangsloch im Bauteil axial überstehenden Fortsatz aufweisen, der eine Spreizrippe bildet, um einen festen Sitz der Schraube an der vormontierten Einheit zu gewährleisten.

Die Schraube kann am freien Ende ihres Schaftes einen gewindefreien Zentrieransatz aufweisen, der einen kleineren Außendurchmesser als der Innendurchmesser der Hülse besitzt. Dieser Zentrieransatz ist sinnvoll beim Einschrauben der Schraube in die Hülse einerseits und in das Gewindeloch oder Gewinde im Werkstück.

Die Hülse kann einen Innendurchmesser aufweisen, der größer als der Flankendurchmesser und kleiner als 90 % des Außendurchmessers des Gewindes am Schaft der Schraube ausgebildet ist. Der Durchmesser des Durchgangsloches liegt also in dem zwischen den beiden Grenzen aufgespannten Bereich. Bei Einhaltung dieser Grenzen ist der Widerstand beim Einschrauben der Schraube in die Hülse noch hinreichend klein. Die erforderliche Vorspannkraft kann nach dem Verschrauben ordnungsgemäß und reproduzierbar aufgebracht werden. Die Hülse kann durch besondere Ausbildung ihres kopfseitigen Kragens beim Verspannen der Schraube derart verpresst werden, daß sie die Funktion eines unter dem Kopf der Schraube wirksamen Dichtelementes erfüllt. Dazu erfolgt eine maßliche Abstimmung des Kragens der Hülse zur Ausnehmung im Kopf der Schraube. Auch dabei wird kein Kunststoffmaterial der Hülse beim Verspannen der Schraube mit eingepresst. Somit besteht auch hierbei nicht die Gefahr eines unzulässigen Setzens und damit Vorspannkraftverlustes in der Schraubenverbindung.

Die Erfindung wird anhand bevorzugter Ausführungsbeispiele weiter erläutert und beschrieben. Es zeigen:
- Fig. 1: eine Schnittdarstellung einer ersten Ausführungsform der Montageeinheit beim Ansetzen an einem Werkstück,
- Fig. 2: eine Schnittdarstellung eines Teils der Montageeinheit gemäß Fig. 1 nach der Montage an dem Werkstück,
- Fig. 3: eine Draufsicht auf das Bauteil gemäß Fig. 1,
- Fig. 4: eine zweite Ausführungsform eines Teils der Montageeinheit beim Ansetzen an einem Werkstück,
- Fig. 5: eine dritte Ausführungsform eines Teils der Montageeinheit beim Ansetzen an einem Werkstück,
- Fig. 6: eine Draufsicht auf das Bauteil gemäß Fig. 5,
- Fig. 7: eine vierte Ausführungsform eines Teils der Montageeinheit beim Ansetzen an einem Werkstück, und
- Fig. 8: eine Draufsicht auf das Bauteil gemäß Fig. 7.

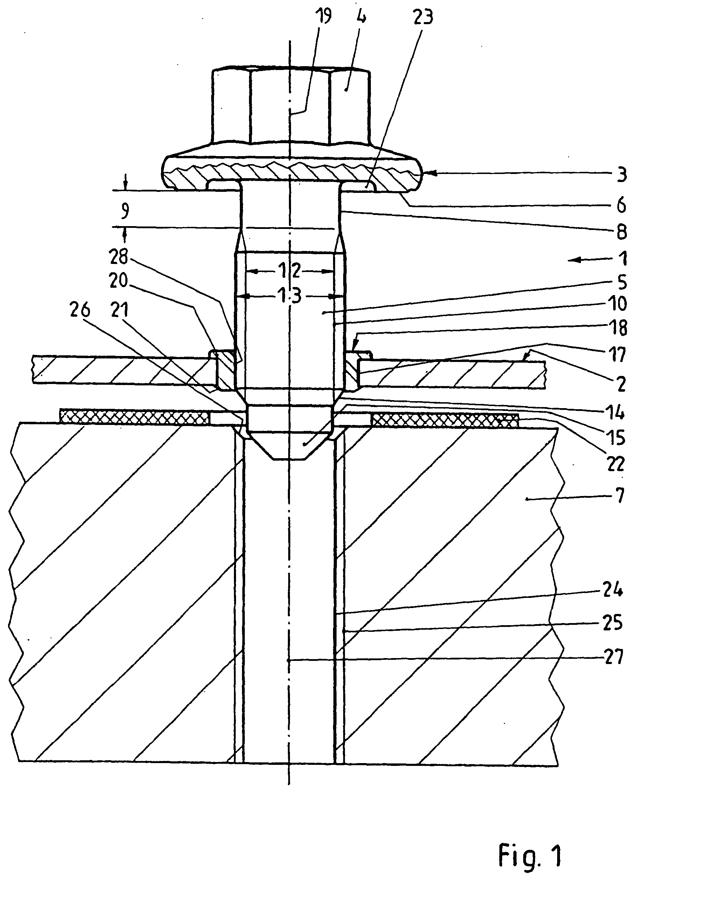

In Fig. 1 ist eine Montageeinheit 1 mit einem der Erläuterung dienenden Teilbereich dargestellt. Die Montageeinheit 1 besteht aus einem Bauteil 2 und mindestens einer Schraube 3. In den Zeichnungen ist generell jeweils nur eine Schraube 3 in Verbindung mit einem Bauteil 2 dargestellt. Es versteht sich, daß an einem Bauteil 2 insbesondere auch mehrere Schrauben 3 in entsprechendem Abstand voneinander vorgesehen sein können.

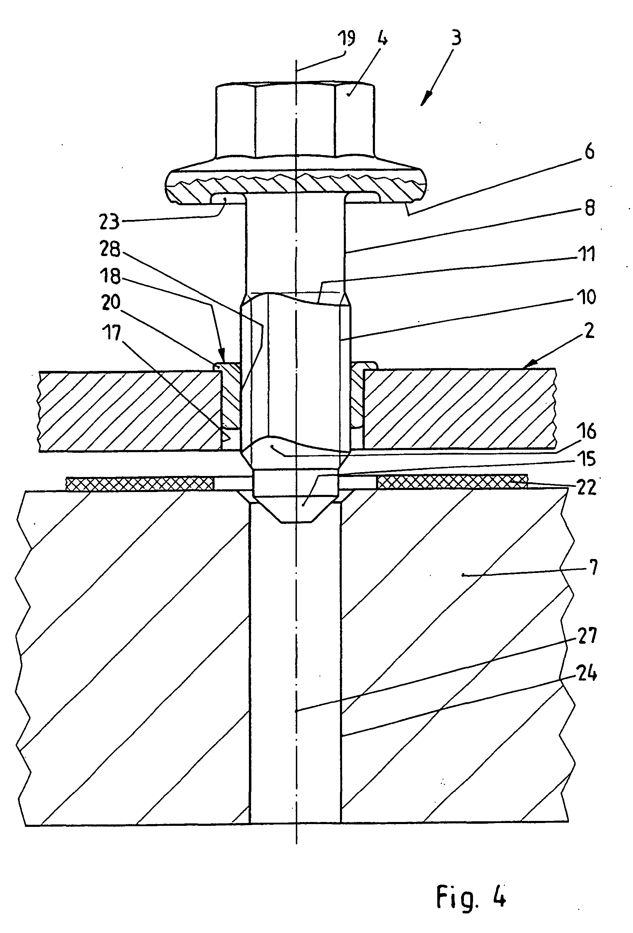

Die Schraube 3 weist einen Kopf 4, der in bekannter Weise zum Ansatz eines Verdrehwerkzeuges ausgebildet ist, und einen Schaft 5 auf. Der Kopf 4 besitzt am Übergang zum Schaft 5 eine Auflagefläche 6, die letztlich bei der Montage der Montageeinheit 1 an einem Werkstück 7 an dem Bauteil 2 zur Anlage kommt. Der Schaft 5 jeder Schraube 3 weist ausgehend vom Kopf 4 bzw. der Auflagefläche 6 eine Ringnut 8 auf, die sich über eine axiale Länge 9 des Schaftes 5 erstreckt. An die Ringnut 8 schließt ein Gewinde 10 an, welches hier als metrisches Gewinde ausgebildet ist und sich mehr oder weniger über die gesamte Länge des Schaftes 5 im Anschluß an die Ringnut 8 erstreckt. Der Schaft 5 kann aber auch (Fig. 4) im Bereich des Gewindes 10 des Schaftes 5 einen trilobularen Querschnitt 11, der durch eine geschwungene Linienführung angedeutet ist, aufweisen. Das Gewinde 10 am Schaft 5 weist einen Kerndurchmesser 12 und einen Außendurchmesser 13 auf. Der Flankendurchmesser des Gewindes 10 wird nach der bekannten Formel bestimmt. Am freien Ende des Schaftes 5 kann ein konisch ausgebildeter Ansatzbereich 14 vorgesehen sein. Es kann zusätzlich, wie dargestellt, ein Zentrieransatz 15 vorgesehen sein. Über die Länge des Schaftes 5 der gewindefurchenden Schraube 3 (Fig. 4) schließt sich in Richtung auf den Kopf 4 an den Ansatzbereich 14 ein Furchbereich 16 und ein Glättbereich an.

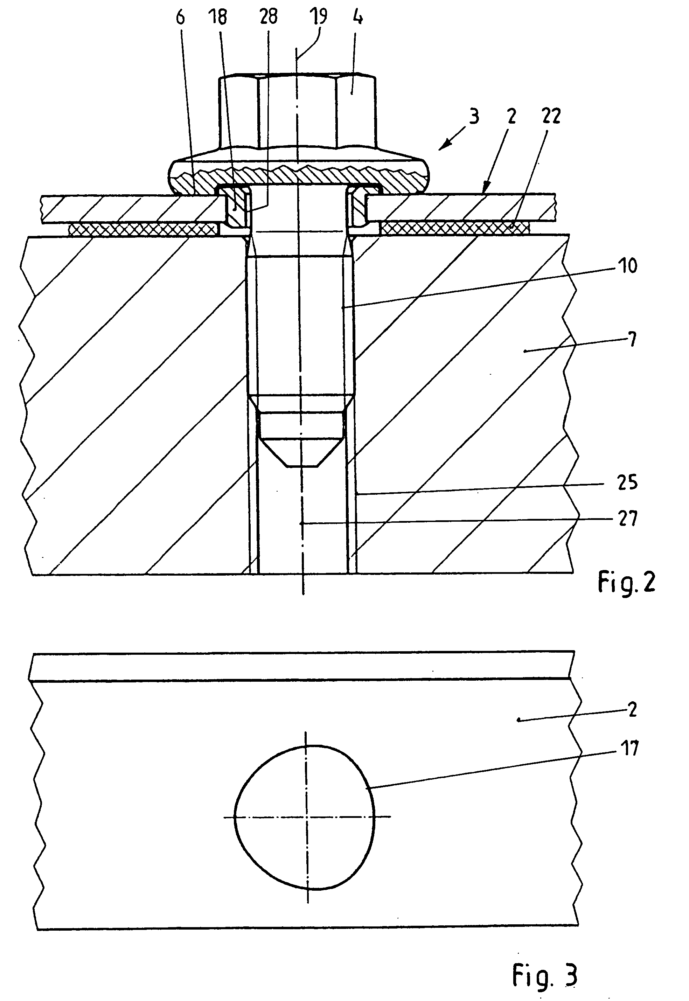

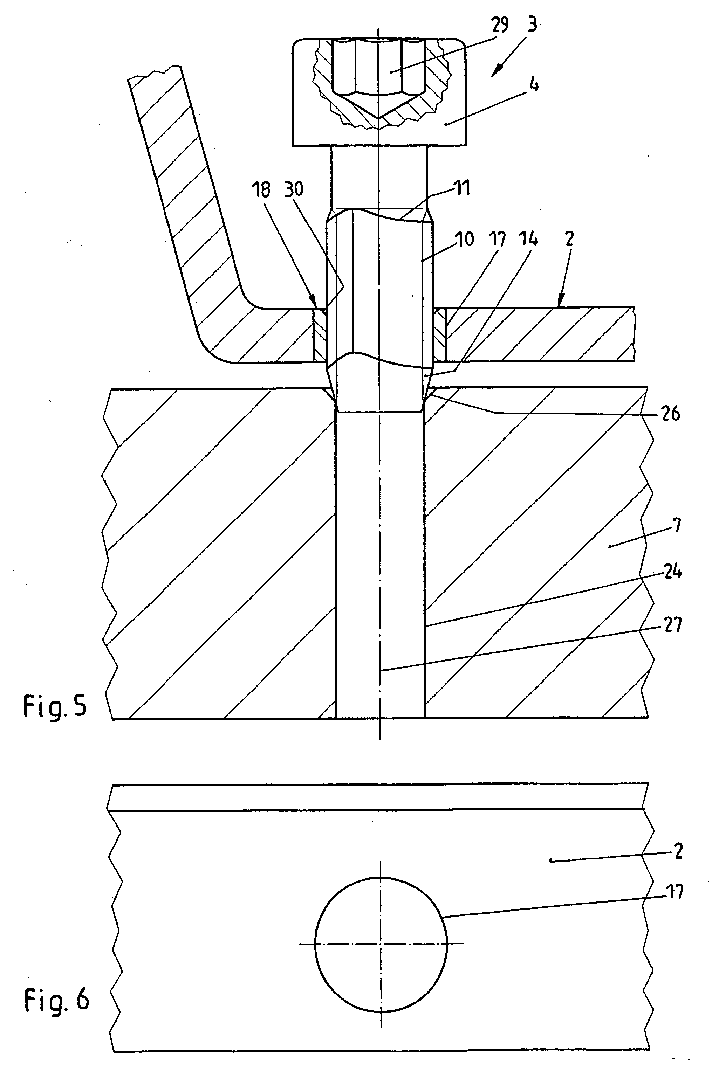

In dem Bauteil 2 ist an der dafür vorgesehenen Stelle ein Durchgangsloch 17 vorgesehen, welches einen trilobularen Querschnitt (Fig. 3) aufweist. Das Durchgangsloch kann auch aus einer durchgehenden Bohrung (Fig. 6) in dem Bauteil 2 bestehen. Es versteht sich, daß das Bauteil 2 an den dafür vorgesehenen Stellen für jede Schraube 3 ein solches Durchgangsloch 17 aufweist.

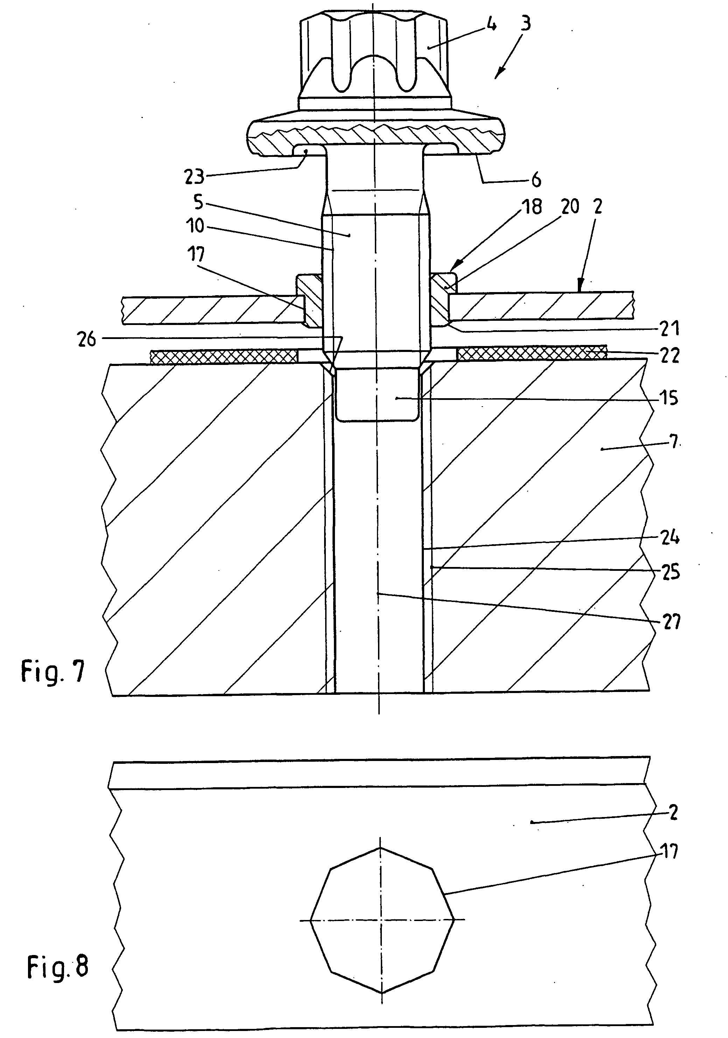

Das Durchgangsloch 17 in dem Bauteil 2 ist insbesondere unrund gestaltet, also z. B. trilobular, wie in Fig. 3 dargestellt, oder vieleckig, wie aus Fig. 8 ersichtlich. Es kann eine radiale Ausnehmung besitzen oder auch als Langloch gestaltet sein. All diese unrunden Querschnitte des Durchgangslochs 17 dienen dem Zweck, eine Hülse 18 verdrehgesichert aufnehmen zu können. Die Hülse 18 bildet ein dübelartiges Vormontageelement und dient der Aufnahme der Schraube 3 an dem Bauteil 2, und zwar in der Weise, daß die Achse 19 der Schraube 3 in der vormontierten Stellung rechtwinklig zu dem Bauteil 2 bzw. dem Werkstück 7 ausgerichtet wird. Die Hülse 18 kann eine größere axiale Erstreckung aufweisen, als es der Dicke des Bauteils 2 entspricht. Es kann insbesondere ein Kragen 20 vorgesehen sein, der sich außen auf der Oberfläche des Bauteils 2 anlegt und einen Anschlag bildet, der ein tieferes Einpressen oder Durchpressen durch das Bauteil 2 verhindert. Auf der anderen Seite, also dem Werkstück 7 zugekehrt, kann die Hülse 18 um ein gewisses Maß über dem Bauteil 2 vorstehen und dort mit einem Fortsatz versehen sein, der insbesondere eine Spreizrippe 21 bildet. Damit ist die Hülse 18 in axialer Richtung nach beiden Richtungen festgelegt gehalten. Der axiale Überstand der Spreizrippe 21 sollte nur dann vorgesehen sein, wenn sich dies konstruktiv ohne Beeinträchtigung der Vorspannkraft anwenden läßt, beispielsweise dann, wenn eine Dichtung 22 zwischen Bauteil 2 und Werkstück 7 Anwendung findet, deren Bauhöhe größer ist als der axiale Überstand der Spreizrippe 21 an der Hülse 18. Die Hülse 18 besteht aus Kunststoff, der im Vergleich zu einer Blechhülse wesentlich elastischer gestaltet ist, wie es beispielsweise zum Ausgleich eines Mittenversatzes beim Einschrauben mehrerer Schrauben 3 an einem Werkstück 7 erforderlich ist.

Die Schraube 3 weist im Bereich um den Schaft 5 herum, der von der Anlagefläche 6 umschlossen wird, eine umlaufende Vertiefung 23 auf, die zur Aufnahme des Kragens 20 der Hülse 18 ausgebildet und bestimmt ist. Die Dimensionierung ist so getroffen, daß der Kragen 20 mit hinreichend Spiel in axialer und radialer Richtung in der Vertiefung 23 aufgenommen wird, wenn die Schraube festgezogen ist. In diesem Zustand (Fig. 2) nimmt die Vertiefung 23 das Material des Kragens 20 der Hülse 18 mit Spiel auf, so daß die Übertragung der Axialkraft über die Anlagefläche 6 auf das Bauteil 2 nicht beeinträchtigt wird. Insbesondere wird zwischen der Auflagefläche 6 und der Oberfläche des Bauteils 2 kein Kunststoffmaterial eingeklemmt, welches zu Setzerscheinungen führen könnte.

In dem Werkstück 7 ist eine auf die Schraube 3 abgestimmte Bohrung 24 mit Gewinde 25 vorgesehen, welches auf das Gewinde 10 der Schraube 3 abgestimmt ist. Die Bohrung 24 ist oben mit einer Fase 26 versehen (Fig. 1 und 5), die dem erleichterten Einführen des Zentrieransatzes 15 in die Bohrung 24 bzw. des Ansatzbereiches 14 dient.

Die Vormontage der Montageeinheit aus einem Bauteil 2 und mindestens einer Schraube 3 mittels der Hülse 18 läßt sich auf verschiedene Arten erstellen. In einer ersten Montageweise wird die Hülse 18 verdrehgesichert in das Durchgangsloch 17 des Bauteils 2 eingesetzt. Anschließend wird die Schraube 3 in die Hülse 18 eingeführt und etwa so weit eingeschraubt, wie dies Fig. 1 erkennen läßt. Dabei spreizt sich die Hülse 18 radial auf. Sie verfestigt ihren verdrehgesicherten Sitz und hält die Schraube mit ihrer Achse 19 ausgerichtet fest. Es versteht sich, daß das Bauteil 2 in der Regel mit mehreren solcher Schrauben 3 versehen ist. Die Montageeinheit wird dann auf das Werkstück 7 so aufgesetzt, wie dies Fig. 1 in einem Zwischenschritt zeigt. Anschließend erfolgt das Verschrauben der Schrauben 3, wobei dies gleichzeitig oder auch nacheinander geschehen kann. Dabei fädeln die Zentrieransätze 15 in die Bohrungen 24 ein. Infolge der Elastizität des Kunststoffmaterials der Hülsen 18 können diese begrenzt gegeneinander ausweichen und einen Versatz der Achsen 27 mehrerer Bohrungen 24 im Werkstück 7 gegeneinander ausgleichen. Die Gewinde 10 greifen dann in die Gewinde 25 ein, und am Ende des Einschraubvorgangs ergibt sich an jeder Schraube 3 eine Relativlage, wie dies aus Fig. 2 erkennbar ist. Jede Schraube ist mit ihrem Gewinde 10 aus der Hülse 18 ausgetreten und freigekommen. Die Hülse 18 hat in dieser Position keine Funktion. Die Vorspannkraft wird ausschließlich über die Anlagefläche 6 übertragen.

Es ist bei der Montage jedoch auch möglich, zunächst die Hülsen 18 mit den Schrauben 3 in Kontakt zu bringen, also auf das Gewinde 10 zu schieben. Solche Einheiten aus Schraube 3 und Hülse 18 können dann je in ein Durchgangsloch 7 an dem Bauteil 2 eingepreßt werden. Auch hier wird die elastisch-plastische Nachgiebigkeit des Kunststoffes der Hülse 18 für einen solchen Montageschritt genutzt. Das Festziehen und Verspannen erfolgt dann in gleicher Weise, wie dies oben bereits beschrieben wurde. Es ergibt sich dann eine Endstellung, die wiederum aus Fig. 2 erkennbar ist.

Damit die Schraube 3 in der Hülse 18 positionsgenau und ausgerichtet im Bauteil 2 fest aufgenommen ist, besitzt die Hülse 18 einen Innendurchmesser 28, der kleiner als der Außendurchmesser 13 des mit Gewinde 10 versehenen Schaftes 5 der Schraube 3 ausgebildet ist. Durch die Abstimmung der beiden Durchmesser aufeinander wird auch die Spreizwirkung der Schraube auf die Hülse 18 festgelegt.

In Fig. 4 ist eine weitere Ausführungsform der Montageeinheit dargestellt und verdeutlicht. Sie stimmt in weiten Bereichen mit der Ausführungsform der Fig. 1 bis 3 überein, weshalb auf die dortige Beschreibung verwiesen werden kann. Lediglich das Gewinde 10 der Schraube 4 ist hier nicht als metrisches Gewinde, sondern als gewindefurchendes Gewinde 10 mit einem trilobularen Querschnitt 11 ausgebildet. Dementsprechend befindet sich im Werkstück 7 lediglich eine niedergebrachte Bohrung, in die die Schraube 4 selbstfurchend ihr Gewinde beim Einschrauben einschneidet. Die Hülse 18 ist hier vergleichsweise mit geringerer axialer Erstreckung ausgebildet. Sie besitzt einen abstehenden Kragen 20 als Anschlag für die Begrenzung des Eindrückens der Hülse 18 in das Durchgangsloch 17, welches hier ebenfalls einen trilobularen Querschnitt (Fig. 3) besitzt. Es fehlt am unteren Ende der Hülse 18 eine Spreizrippe 21, so daß eine solche Hülse 18 sich in besonderer Weise eignet, aufgesetzt zusammen mit einer Schraube 4 in die Durchbrechung 17 des Bauteils 2 axial eingepreßt zu werden.

In den Fig. 5 und 6 ist schließlich eine dritte Ausführungsform der Montageeinheit dargestellt und verdeutlicht. Die Schraube 4 besitzt hier einen Innensechskant 29 und ein selbstfurchendes Gewinde 10 mit trilobularem Querschnitt 11. Demgemäß ist die Schraube 4 selbstfurchend ausgebildet und arbeitet mit einer Bohrung 24 im Werkstück 7 zusammen.

Die axiale Länge der Hülse 18 ist hier auf die Dicke des Bauteils 2 abgestimmt, so daß sich eine solche Hülse 18 in das Durchgangsloch 17 im Bauteil 2 einpressen läßt. Durch das nachfolgende Einschrauben der Schraube 4 erhält die Hülse 18 ihren festen unverdrehbaren Sitz, während sich die Schraube 4 auch nach dem Einfädeln in die Bohrung 24 des Werkstücks 7 weiter drehen läßt, ohne daß die Hülse 18 ihren festen Sitz in dem Bauteil 2 verläßt. Da die Hülse 18 beidseitig axial nicht übersteht, kann diese Konstruktion vorteilhaft dann eingesetzt werden, wenn eine Dichtung 22 fehlt. Die Hülse 18 kann oben eine Fase 30 aufweisen, die dem erleichterten Einsetzen der Schraube 4 in die Hülse 18 bei der Vormontage der Montageeinheit gestattet. Die Hülse 18 kann an ihrem Außendurchmesser Übermaß gegenüber dem Durchgangsloch 17 aufweisen, um den festen Sitz nach dem Einpreßvorgang zu begünstigen und die verdrehgesicherte Lagerung durch Reibschluß zu erzielen. Es ist auch möglich, die Hülse 18 unter Verwendung eines Klebemittels o. dgl. in dem Durchgangsloch 17 zu verankern. Im allgemeinen sind solche besonderen Maßnahmen jedoch nicht erforderlich.

In den Fig. 7 und 8 ist eine vierte Ausführungsform der Montageeinheit verdeutlicht. Die Schraube 3 besitzt hier einen Kopf 4 mit einem gelappten Querschnitt. Die Vertiefung 23 im Anschluß an die Anlagefläche 6 weist hier eine geringere axiale Erstreckung als der Kragen 20 der Hülse 18 auf, so daß in verspanntem Zustand eine Dichtwirkung an dieser Stelle erreicht wird. Das Durchgangsloch 17 in dem Bauteil 2 besitzt hier achteckigen Querschnitt. Dementsprechend weist die Hülse 18 einen entsprechend gestalteten Querschnitt außen auf, damit die Hülse 18 verdrehgesichert in dem Bauteil 2 aufgenommen ist. Ansonsten bestehen entsprechende Gemeinsamkeiten zu dem Ausführungsbeispiel der Fig. 1 bis 3.

Bei dem Werkstück 7 kann es sich beispielsweise um ein Unterteil, einen Getriebekasten o. dgl. handeln. Das Bauteil 2 kann ein Oberteil, ein Gehäusedeckel o. dgl. sein. Bei der Montage der Montageeinheit 1 an dem Werkstück 7 kann es erforderlich oder sinnvoll sein, eine Dichtung 22 einzufügen, die ihrerseits eine entsprechend bemessene Durchbrechung aufweist. Die Bohrung 24 im Werkstück 7 ist zweckmäßig mit einer Fase 26 versehen, die dem erleichterten Einführen des Zentrieransatzes 15 des Schaftes 5 der Schraube 3 dient.

### BEZUGSZEICHENLISTE

- 1 -: Montageeinheit
- 2 -: Bauteil
- 3 -: Schraube
- 4 -: Kopf
- 5 -: Schaft
- 6 -: Anlagefläche
- 7 -: Werkstück
- 8 -: Ringnut
- 9 -: axiale Länge
- 10 -: Gewinde

- 11 -: trilobularer Querschnitt
- 12 -: Kerndurchmesser
- 13 -: Außendurchmesser
- 14 -: Ansatzbereich
- 15 -: Zentrieransatz
- 16 -: Furchbereich
- 17 -: Durchgangsloch
- 18 -: Hülse
- 19 -: Achse
- 20 -: Kragen

- 21 -: Spreizrippe
- 22 -: Dichtung
- 23 -: Vertiefung
- 24 -: Bohrung
- 25 -: Gewinde
- 26 -: Fase
- 27 -: Achse
- 28 -: Innendurchmesser
- 29 -: Innensechskant
- 30 -: Fase

## Patentansprüche

1. Montageeinheit (1) aus einem Bauteil (2) und mindestens einer Schraube (3) sowie einer jeder Schraube zugeordneten Hülse (18), wobei das Bauteil (2) für jede Schraube (3) je ein Durchgangsloch (17) aufweist, jede Schraube (3) einen der Betätigung dienenden Kopf (4) mit einer dem Bauteil (2) zugekehrten Auflagefläche (6) und einen zumindest teilweise mit einem Gewinde (10) versehenen Schaft (5) besitzt, wobei die Montageeinheit (1) mit der Schraube (3) an einem Werkstück (7) montierbar ist, und die Hülse (18) in das Durchgangsloch (17) festsitzend einführbar ausgebildet und mit der Schraube (3) und dem Bauteil (2) durch eine Axialsperre verliersicher verbunden ist, **dadurch gekennzeichnet, dass** zur Bereitstellung der Axialsperre und einer Achsausrichtung der Schraube (3) der Durchmesser des Durchgangsloches (17) im Bauteil (2), die Hülse (18) mit ihrem Außendurchmesser und ihrem Innendurchmesser (28) und die Schraube (3) mit ihrem mit dem Gewinde (10) versehenen Schaft (5) derart relativ zueinander dimensioniert sind, dass die Schraube (3) nach der Vormontage der Montageeinheit das Durchgangsloch (17) im Bauteil (2) festgesetzt durchsetzt, und dass die Auflagefläche (6) an der Schraube (3) zur Übertragung der Axialkraft unter Umgehung der Hülse (18) mit dem Bauteil (2) nach der Montage in direkten Kontakt kommend ausgebildet ist.

2. Montageeinheit nach Anspruch 1, **dadurch gekennzeichnet, dass** die Schraube (3) im Bereich des Schaftes (5) im Anschluß an die Auflagefläche (6) eine einen Hinterschnitt bildende Ringnut (8) aufweist, deren Durchmesser kleiner als der Innendurchmesser (28) der Hülse (18) und deren wirksame axiale Länge (9) größer als die Länge der Hülse (18) im Durchgangsloch (17) des Bauteils (2) ist.

3. Montageeinheit nach Anspruch 1, **dadurch gekennzeichnet, dass** die Hülse (18) in dem Durchgangsloch (17) des Bauteils (2) durch Reibschluß und/oder Formschluß festsetzbar ausgebildet ist.

4. Montageeinheit nach einem der Ansprüche 1 bis 3, **dadurch gekennzeichnet, dass** die Hülse (18) in dem Durchgangsloch (17) des Bauteils (2) einen Innendurchmesser (28) aufweist, der größer als der Kerndurchmesser (12) des mit dem Gewinde (10) versehenen Schaftes (5) der Schraube (3) ausgebildet ist.

5. Montageeinheit nach einem der Ansprüche 1 bis 4, **dadurch gekennzeichnet, dass** die Schraube (3) zur Verhinderung des Einklemmens von Material der Hülse (18) beim Anziehen im Anschluß an die Auflagefläche (6) eine umlaufende als Ausweichnut ausgebildete Vertiefung (23) aufweist.

6. Montageeinheit nach einem der Ansprüche 1 bis 5, **dadurch gekennzeichnet, dass** die Hülse (18) eine größere Bauhöhe als das Bauteil (2) im Bereich des Durchgangsloches (17) aufweist und auf der dem Kopf (4) der Schraube (3) zugekehrten Seite einen radial über das Durchgangsloch (17) überstehenden Kragen (20) oder entsprechende Vorsprünge aufweist, die das Festsetzen in dem Durchgangsloch (17) des Bauteils (2) begrenzen.

7. Montageeinheit nach Anspruch 6, **dadurch gekennzeichnet, dass** die Hülse (18) zumindest auf der dem Kopf (4) der Schraube (3) zugekehrten Seite außerhalb der Höhe des Bauteils (2) im Bereich des Durchgangslochs (17) durch das Einschrauben der Schraube (3) spreizbar ausgebildet ist.

8. Montageeinheit nach Anspruch 1, 6 oder 7, **dadurch gekennzeichnet, dass** die Hülse (18) auf der dem Kopf (4) der Schraube (3) abgekehrten Seite einen über das Durchgangsloch (17) im Bauteil axial überstehenden Fortsatz aufweist, der eine Spreizrippe (21) bildet.

9. Montageeinheit nach Anspruch 1, **dadurch gekennzeichnet, dass** die Schraube (3) am freien Ende ihres Schaftes (5) einen gewindefreien Zentrieransatz (15) aufweist, der einen kleineren Außendurchmesser als der Innendurchmesser (28) der Hülse (18) aufweist.

10. Montageeinheit nach einem der Ansprüche 1 bis 9, **dadurch gekennzeichnet, dass** die Hülse (18) einen Innendurchmesser (28) aufweist, der größer als der Flankendurchmesser und kleiner als 90 % des Außendurchmessers (13) des Gewindes (10) am Schaft (5) der Schraube (3) ausgebildet ist.

## Claims

1. An assembly unit (1), comprising a component (2), at least one screw (3) and a bush (18) being associated with each screw (3), the component (2) for each screw (3) including a through hole (17), each screw (3) including head (4) being designed and arranged to rotate the screw (4) and having a supporting surface (6) facing the component (2) and including a shank (5) at least partially including a thread (10), the assembly unit (1) being mountable to a work piece (7) by the screw (3), and the bush (18) being designed and arranged to be fixedly connected in the respective through hole (17), the bush (18), the screw (3) and the component (2) being designed and arranged to be captively locked in an axial direction, **characterized in that** the diameter of the through hole (17) in the component (2), the bush (18) with its outer diameter and its inner diameter (28), and the screw (3) with its shank (5) including the thread (10) are designed and arranged with respect to each other to form the locking in axial direction and an alignment of the screw (3) in an axial direction, **in that** the screw (3) after pre-assembly of the assembly unit protrudes the through hole (17) in the component (2) in a fixed manner, and **in that** the supporting surface (6) is designed and arranged to directly contact the component (2) after assembly without contacting the bush (18) to transmit an axial force.

2. Assembly unit of claim 1, **characterized in that** the screw (3) in the region of its shank (5) close to the supporting surface (6) includes a ring grove (8) forming an undercut, the ring grove (8) having a diameter which is less than the inner diameter (28) of the bush (18) and an effective axial length (9) which is more than the length of the bush (18) in the through hole (17) of the component (2).

3. Assembly unit of claim 1, **characterized in that** the bush (18) is fixedly connected in the through hole (17) due to frictional engagement and/or due to form fit.

4. Assembly unit of one of the claims 1 to 3, **characterized in that** the bush (18) in the through hole (17) of the component (2) has an inner diameter (28) which is more than the core diameter (12) of the thread (10) on the shank (5) of the screw (3).

5. Assembly unit of one of the claims 1 to 4, **characterized in that** the screw (3) includes an impression (23) being designed as a continuous yielding channel, the impression being arranged close to the supporting surface (6) and being designed and arranged to prevent clamping of material of the bush (18) during tightening the screw.

6. Assembly unit of one of the claims 1 to 5, **characterized in that** the bush (18) has greater height than the component (2) in the region of the through hole (17), and **in that** the bush (18) at its side facing the head (4) of the screw (3) includes a collar (20) protruding beyond the through hole (17) in a radial direction or includes respective protrusions which limit the capability of pressing the bush (18) into the through hole (17) of the component (2).

7. Assembly unit of claim 6, **characterized in that** the bush (18) at its side facing the head (4) of the screw (3) outside the height of the component (2) in the region of the through hole (17) is designed to be expandable by screwing in the screw (3).

8. Assembly unit of claim 1, 6 or 7, **characterized in that** the bush (18) at its side facing away from the head (4) of the screw (3) includes a protrusion which forms an expanding rib (21), the protrusion being designed and arranged to extend beyond the through hole (17) in an axial direction.

9. Assembly unit of claim 1, **characterized in that** the screw (3) at the free end of the shank (5) includes a centering element (15), the centering element having no thread and having a smaller outer diameter than the inner diameter (28) of the bush (18).

10. Assembly unit of one of the claims 1 to 9, **characterized in that** the bush (18) includes an inner diameter (28) which is more than the flank diameter and less than 90 percent of the outer diameter (13) of the thread (10) on the shank (5) of the screw (3).

## Revendications

1. Unité de montage (1) constituée d'un élément de construction (2) et d'au moins une vis (3) ainsi que d'une douille (18) associée à chaque vis, l'élément de construction (2) présentant pour chaque vis (3) un trou débouchant (17), chaque vis (3) possédant une tête (4) servant à l'actionnement avec une surface d'appui (6) tournée vers l'élément de construction (2) et une tige (5) pourvue au moins en partie d'un filetage (10), l'unité de montage (1) avec la vis (3) pouvant être montée sur une pièce d'ouvrage (7), et la douille étant réalisée de manière à pouvoir être introduite avec ajustement bloqué dans le trou débouchant (17), et étant reliée imperdable à la vis (3) et à l'élément de construction (2) par un blocage axial, **caractérisée en ce que** pour fournir le blocage axial et une orientation de l'axe de la vis (3), le diamètre du trou débouchant (17) dans l'élément de construction (2), la douille (18) avec son diamètre extérieur et son diamètre intérieur (28) et la vis (3) avec sa tige (5) pourvue du filetage (10) sont dimensionnés les uns par rapport aux autres de manière qu'après le prémontage de l'unité de montage, la vis (3) traverse bloquée le trou débouchant (17) dans l'élément de construction (2), et **en ce qu'**après le montage, la surface d'appui (6) sur la vis (3) est réalisée de manière à venir en contact direct avec l'élément de construction (2) pour transmettre la force axiale en contournant la douille (18).

2. Unité de montage selon la revendication 1, **caractérisée en ce que** dans la zone de la tige (5), à la suite de la surface d'appui (6), la vis (3) présente une rainure annulaire (8) formant un détalonnage dont le diamètre est inférieur au diamètre intérieur (28) de la douille (18) et dont la longueur axiale (9) utile est supérieure à la longueur de la douille (18) dans le trou débouchant (17) de l'élément de construction (2).

3. Unité de montage selon la revendication 1, **caractérisée en ce que** la douille (18) est réalisée de manière à pouvoir être bloquée dans le trou débouchant (17) de l'élément de construction (2) par liaison par friction et/ou liaison par complémentarité de formes.

4. Unité de montage selon l'une des revendications 1 à 3, **caractérisée en ce que** la douille (18) présente dans le trou débouchant (17) de l'élément de construction (2) un diamètre intérieur (28) qui est supérieur au diamètre du noyau (12) de la tige (5), pourvue du filetage (10), de la vis (3).

5. Unité de montage selon l'une des revendications 1 à 4, **caractérisée en ce que** pour empêcher que la matière de la douille (18) ne soit coincée lors du serrage, la vis (3) présente à la suite de la surface d'appui (6) un renfoncement (23) périphérique réalisé comme rainure de dégagement.

6. Unité de montage selon l'une des revendications 1 à 5, **caractérisée en ce que** la douille (18) présente une plus grande hauteur de construction que l'élément de construction (2) dans la zone du trou débouchant (17) et comporte, sur le côté tourné vers la tête (4) de la vis (3), une collerette (20) dépassant radialement du trou débouchant (17) ou des saillies correspondantes qui limitent le blocage dans le trou débouchant (17) de l'élément de construction (2).

7. Unité de montage selon la revendication 6, **caractérisée en ce qu'**au moins sur le côté tourné vers la tête (4) de la vis (3), à l'extérieur de la hauteur de l'élément de construction (2), dans la zone du trou débouchant (17), la douille (18) est réalisée écartable par vissage à l'intérieur de la vis (3).

8. Unité de montage selon la revendication 1, 6 ou 7, **caractérisée en ce que** la douille (18) forme, sur le côté tourné à l'opposé de la tête (4) de la vis (3), un prolongement dépassant axialement du trou débouchant (17) de l'élément de construction, lequel prolongement forme une nervure d'écartement (21).

9. Unité de montage selon la revendication 1, **caractérisée en ce que** la vis (3) présente, à l'extrémité libre de sa tige (5), un appendice de centrage (15) sans filetage dont le diamètre extérieur est inférieur au diamètre intérieur (28) de la douille (18).

10. Unité de montage selon l'une des revendications 1 à 9, **caractérisée en ce que** la douille (18) présente un diamètre intérieur (28) qui est supérieur au diamètre de flanc et inférieur à 90 % du diamètre extérieur (13) du filetage (10) sur la tige (5) de la vis (3).
